# EUROPEAN PATENT SPECIFICATION

(11) **EP 3 202 292 B1**
(45) Date of publication and mention of the grant of the patent: **20.05.2020**
(21) Application number: 17154349.9
(22) Date of filing: 02.02.2017
(51) Int. Cl.: A47J 37/06

(54) **GRILLING APPARATUS HAVING A CONTAINING RECESS FOR RECEIVING A FEEDING SEAT WHEN IDLING**
GRILLVORRICHTUNG MIT EINER AUSSPARUNG ZUR AUFNAHME EINES ZUFÜHRTRICHTERS
APPAREIL DE CUISSON PRÉSENTANT UN ÉVIDEMENT DESTINÉ À RECEVOIR UN SUPPORT D'ALIMENTATION

(30) Priority: 05.02.2016 CN 201610081882
(43) Date of publication of application: 09.08.2017
(73) Proprietor: Tsann Kuen (Zhangzhou) Enterprise Co., Ltd., Fujian 363107 (CN)
(72) Inventor: Chang, Wenyu, Zhangzhou, Fujian 363107 (CN); Zhu, Xiaoyue, Zhangzhou, Fujian 363107 (CN)
(74) Representative: Cohausz & Florack

(56) References cited:
- WO-A1-2014/170589
- GB-A- 210 065
- US-A- 5 544 569
- US-A1- 2006 236 873
- US-A1- 2007 283 821

## Description

The disclosure relates to a grilling apparatus, and more particular to a grilling apparatus having a containing recess for receiving a feeding seat when the grilling apparatus is idling.

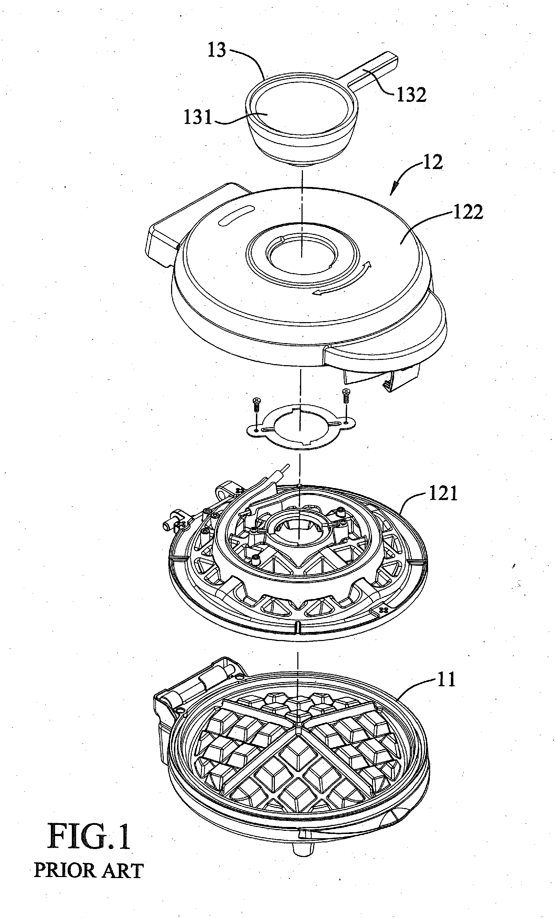

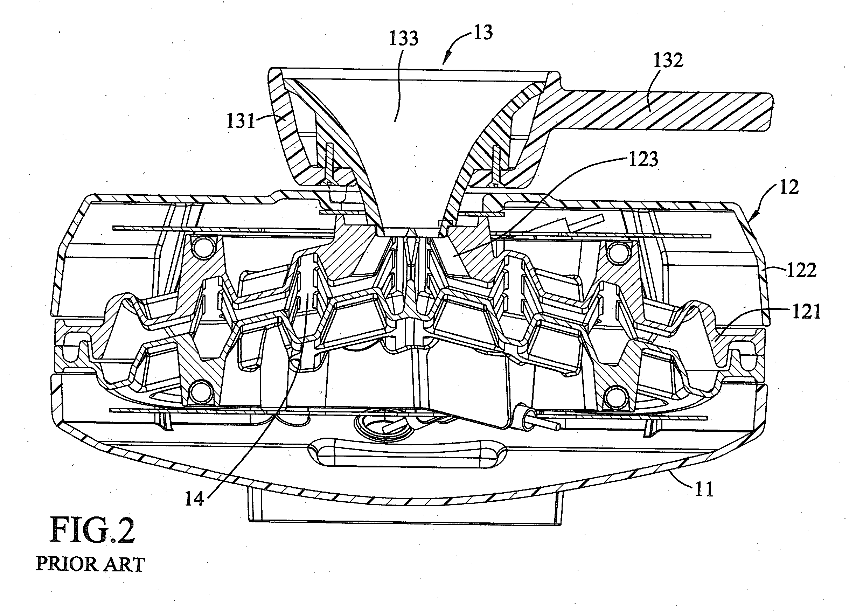

Referring to FIGS. 1 and 2, a conventional grilling apparatus includes a lower grilling plate 11, an upper grilling plate 12 and a feeding seat 13.

The lower grilling plate 11 and the upper grilling plate 12 define a grilling space 14 therebetween, and are operable to cover or uncover the grilling space 14. The upper grilling plate 12 includes an upper case 122, and a grilling plate 121 that is mounted to the upper case 122 and that cooperates with the upper case 122 to define a delivering passage 123 that is in spatial communication with a center of the grilling space 14. The feeding seat 13 includes a body 131 and a handle 132 fixedly connected to a top portion of the body 131. The body 131 is detachably mounted to the upper case 122, and defines a feeding passage 133 that is in spatial communication with the delivering passage 123 and the grilling space 14.

In a process of making, for example, waffles, a user can pour a batter into the feeding seat 13. Since the delivering passage 123 is in spatial communication with the grilling space 14, the batter is evenly distributed from the center of the grilling space 14 to a periphery of the grilling space 14, thereby obtaining waffles with better quality. After use, the feeding seat 13 may be detached from the upper case 122 of the upper grilling plate 12 for cleaning. After cleaning, the feeding seat 13 may be remounted to the upper case 122. However, this may result in the requirement of a larger storage space for the conventional grilling apparatus. On the other hand, if the user chooses not to mount the feeding seat 13 back to the upper case 122, it is necessary to find a storage place for the feeding seat 13.

US 2007/0283821 A1 describes a waffle maker set for making filled waffles including a waffler, a tunnel forming device and a filling injector. A nose of the filling injector is inserted through one or more holes on the top grill of the waffler to reach into tunnels formed in the waffle mix, and a filling material (e.g. jelly) is injected into the tunnels to form filled waffles.

Therefore, an object of the present invention is to provide a grilling apparatus that can alleviate at least one of the drawbacks associated with the prior art. The present invention is defined by the features of claim 1.

Other features and advantages of the present disclosure will become apparent in the following detailed description of the embodiment and variation with reference to the accompanying drawings, of which:
FIG. 1 is an exploded perspective view of a conventional grilling apparatus;
FIG. 2 is a sectional view of the conventional grilling apparatus;
FIG. 3 is a schematic perspective view of an embodiment of a grilling apparatus according to the present disclosure showing a feeding seat to be mounted to an upper case unit of a case unit;
FIG. 4 is a schematic perspective view of the embodiment showing the feeding seat to be received in a containing recess;
FGI. 5 is a sectional view of the embodiment;
FIG. 6 is a bottom view of the embodiment showing the feeding seat being rotated to a removable position;
FIG. 7 is a sectional view of the embodiment taken along line VII-VII of FIG.6;
FIG. 8 is a schematic view of the embodiment showing the feeding seat at the removable position;
FIG. 9 is a bottom view of the embodiment showing the feeding seat being rotated to a confined position;
FIG. 10 is a sectional view of the embodiment taken along line X-X of FIG. 9;
FIG. 11 is a schematic view of the embodiment showing the feeding seat at the confined position; and
FIG. 12 is a perspective view of a variation of the embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

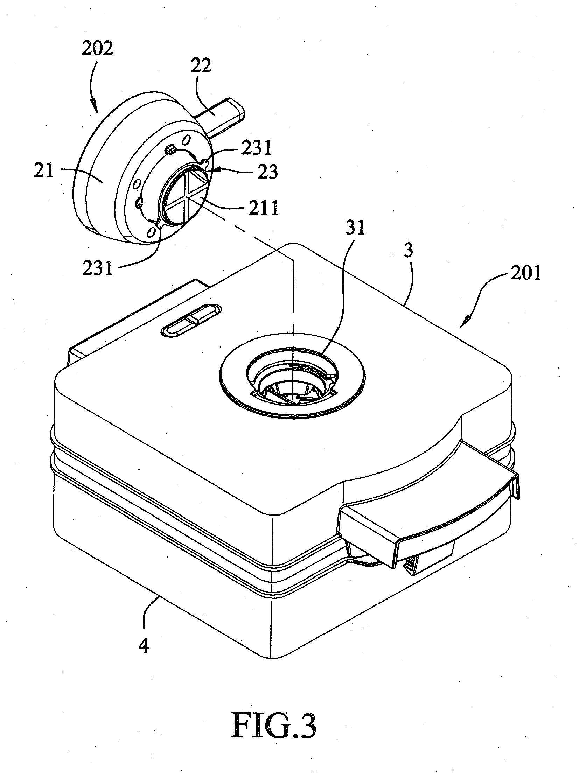

Referring to FIGS. 3 to 5, an embodiment of a grilling apparatus according to the present disclosure is used for cooking a food material. In this embodiment, the food material may be, but is not limited to, a batter for making waffles.

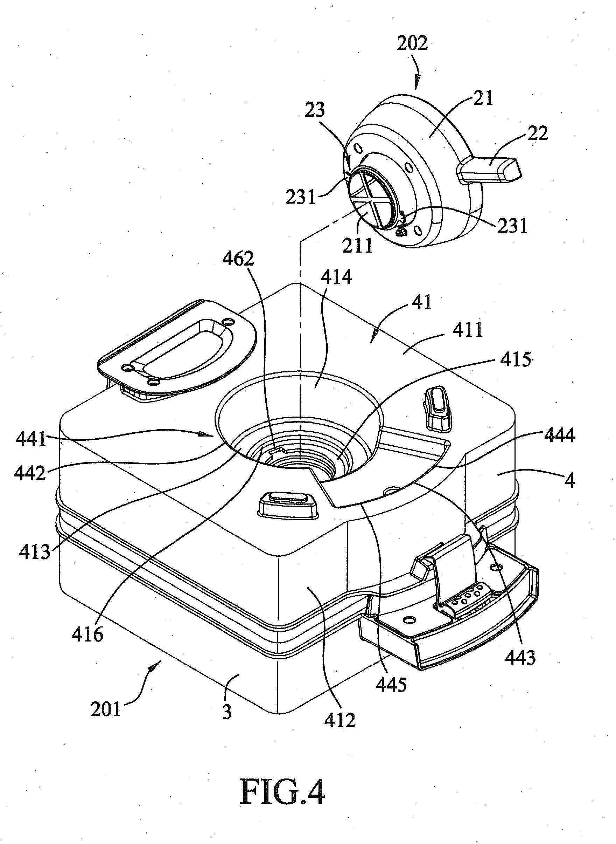

The grilling apparatus includes a case unit 201 and a feeding seat 202. The case unit 201 includes an upper case unit 3 and a lower case unit 4. It should be noted that the embodiment in FIG. 4 is shown upside down to show a bottom side of the case unit 201.

The feeding seat 202 includes a hollow main body 21, a handle 22 fixedly connected to the main body 21, a positioning block unit 23 disposed on a lower end of the main body 21, a blocking wall 24 disposed in the main body 21, and a feeding passage 211. The main body 21 has an annular horizontal cross-section, and defines the feeding passage 211 that is tapered from an upper end of the main body 21 to the lower end of the main body 21. The handle 22 is connected to and extends outwardly from the upper end of the main body 21. The positioning block unit 23 includes two positioning blocks 231 that are respectively disposed on and extend outwardly from two diametrically opposed portions of the main body 21. The blocking wall 24 divides the feeding passage 211 into two sub-passages.

The upper case unit 3 and the lower case unit 4 define a grilling space 5 therebetween and are operable to pivot relative to each other to uncover the grilling space 5. The upper case unit 3 of the case unit 201 has a disposition space 31 for detachably receiving at least a portion of the feeding seat 202 when the grilling apparatus is grilling, and a delivering passage 32 that spatially interconnects the disposition space 31 and the grilling space 5. The engagement between the feeding seat 202 and the upper case unit 3 is well known in the art, and is therefore not elaborated for the sake of brevity.

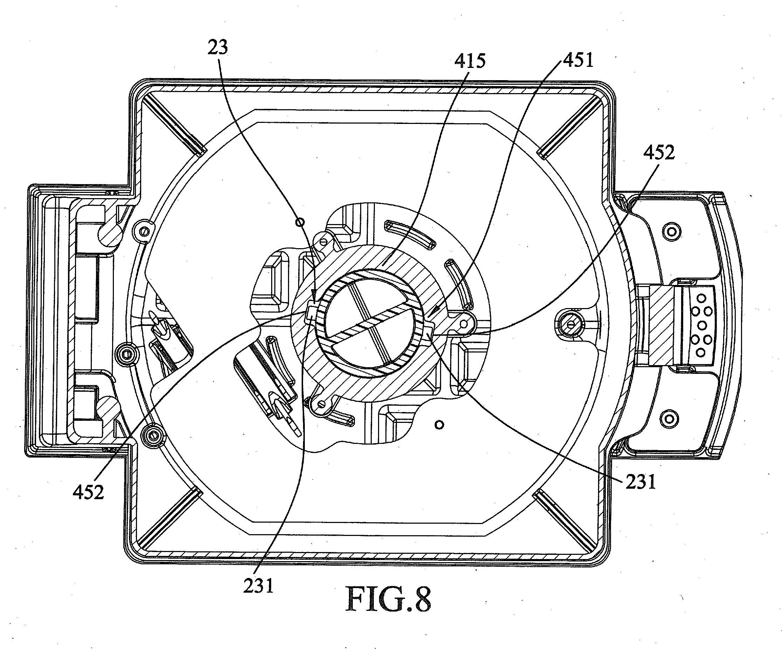

Referring to FIGS. 4 and 6 to 8, the lower case unit 4 includes a case wall 41 and a positioning wall 42 that is spaced apart from and connected to the case wall 41.

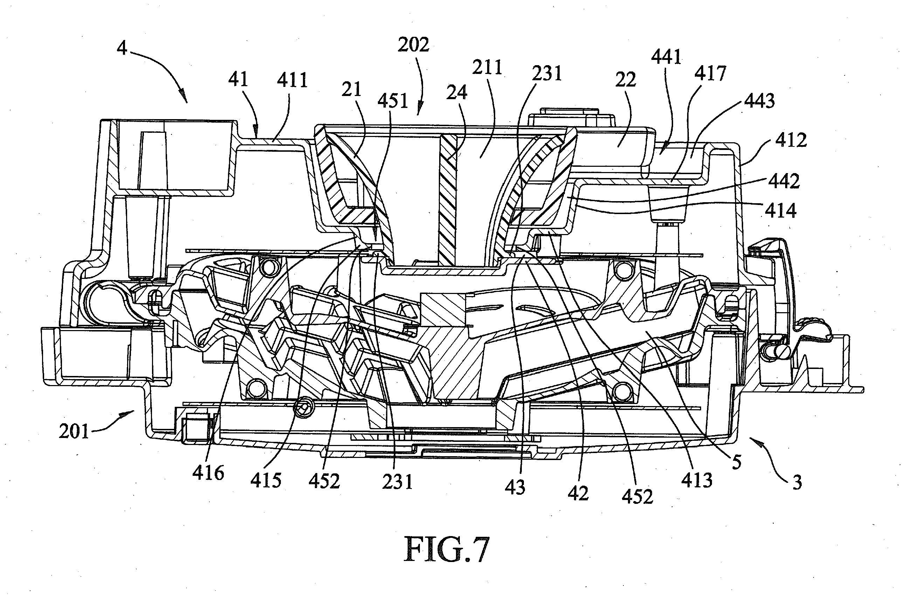

The case wall 41 has a bottom wall portion 411, a surrounding wall portion 412 that extends upwardly toward the upper case unit 3, a horizontal wall portion 413 that is disposed horizontally above the bottom wall portion 411 and that is surrounded by the surrounding wall portion 412, an upright wall portion 414 that is connected between the bottom wall portion 411 and the horizontal wall portion 413, a ring wall portion 415 that is disposed horizontally above the horizontal wall portion 413, a tilting wall portion 416 that is connected between the horizontal wall portion 413 and the ring wall portion 415, and an extending wall portion 417 (see FIG. 7) that extends outwardly from a bottom end of the upright wall portion 414. Each of the bottom wall portion 411, the horizontal wall portion 413 and the ring wall portion 415is annular. Each of the surrounding wall portion 412, the upright wall portion 414 and the tilting wall portion 416 has a substantial annular horizontal cross-section. The tilting wall portion 416 extends upwardly and inwardly from the horizontal wall portion 413 to connect with the ring wall portion 415. The extending wall portion 417 has a substantial sector shape.

The bottom wall portion 411, the horizontal wall portion 413, the upright wall portion 414, the ring wall portion 415, the tilting wall portion 416 and the extending wall portion 417 of the case wall 41 of the lower case unit 4 cooperatively define a containing recess 441 that is indented upwardly toward the upper case unit 3, and that is for detachably receiving the feeding seat 202 when the grilling apparatus is idling. The containing recess 441 has a main body containing portion 442 and a handle containing portion 443. The main body 21 and the handle 22 of the feeding seat 202 are operable to be respectively received in the main body containing portion 442 and the handle containing portion 443. The main body containing portion 442 is tapered from the bottom wall portion 411 toward the ring wall portion 415, and has a substantial circular horizontal cross-section. The handle containing portion 443 is connected to an upper end of the main body containing portion 442, is defined by the upright wall portion 414 and the extending wall portion 417, and has a sector-shaped horizontal cross-section. The handle containing portion 443 has a first recess segment 444 and a second recess segment 445 that is in spatial communication with the first recess segment 444.

The ring wall portion 415 of the case wall 41 is located under the positioning wall 42, and defines a passing groove unit 451 therebetween that is located near and under the positioning wall 42 and that is in spatial communication with a top portion of the main body containing portion 442 of the containing recess 441. The passing groove unit 451 includes two passing grooves 452 that are formed in an inner wall surface of the case unit 201 defining the containing recess 441 and that are respectively disposed at two diametrically opposed positions of the case wall 41.

The positioning wall 42 is located above the ring wall portion 415 of the case wall 41, and cooperates with the ring wall portion 415 to define a positioning space 43 that is disposed above and in spatial communication with the main body containing portion 442 of the containing recess 441 and the passing grooves 452.

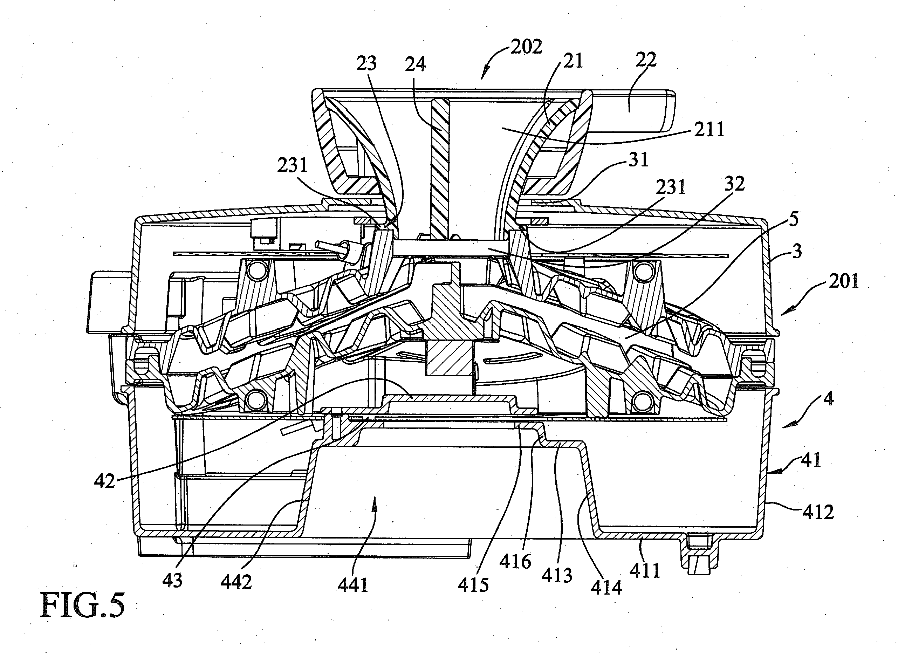

Referring to FIGS. 3 and 5, when it is desired to grill the food material by the grilling apparatus, the feeding seat 202 is detachably mounted to the upper case unit 3 such that the feeding passage 211 of the feeding seat 202 is in spatial communication with the grilling space 5 and is adapted for the food material to enter the grilling space 5 through the feeding passage 211 and to be cooked in the grilling space 5 between the upper case unit 3 and the lower case unit 4. Since the feeding passage 211 is divided into the two sub-passages by the blocking wall 24, two kinds of food materials can be fed into the grilling space 5, respectively through the sub-passages to obtain dual-flavored waffles. Alternatively, other ingredients, such as nuts, sweets, cereals, etc., can be fed into the grilling space 5 through the sub-passages.

Referring to FIG. 4, when the grilling apparatus is idling, the user can clean the feeding seat 202, followed by putting the feeding seat 202 into the containing recess 441 of the lower case unit 4. During the process of putting the feeding seat 202 into the containing recess 441, the positioning blocks 231 of the feeding seat 202 are respectively aligned with the passing grooves 452 defined by the case wall 41 to allow the feeding seat 202 to enter the containing recess 441. In other words, the positioning block unit 23 is operable to enter the positioning space 43 through the passing groove unit 451 and to be subsequently rotated in the positioning space 43 to be misaligned from the passing groove unit 451, so that the positioning block unit 23 is detachably confined in the positioning space 43.

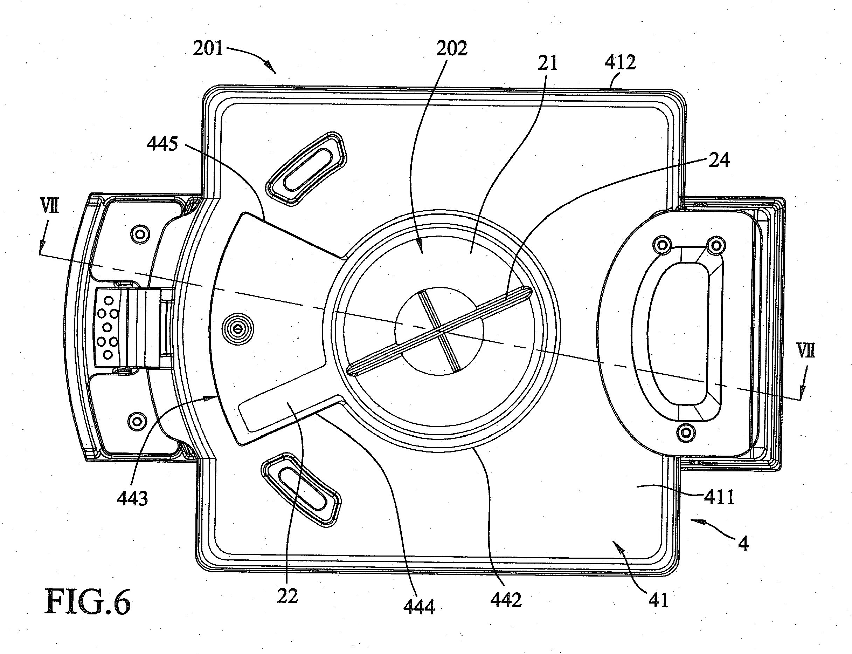

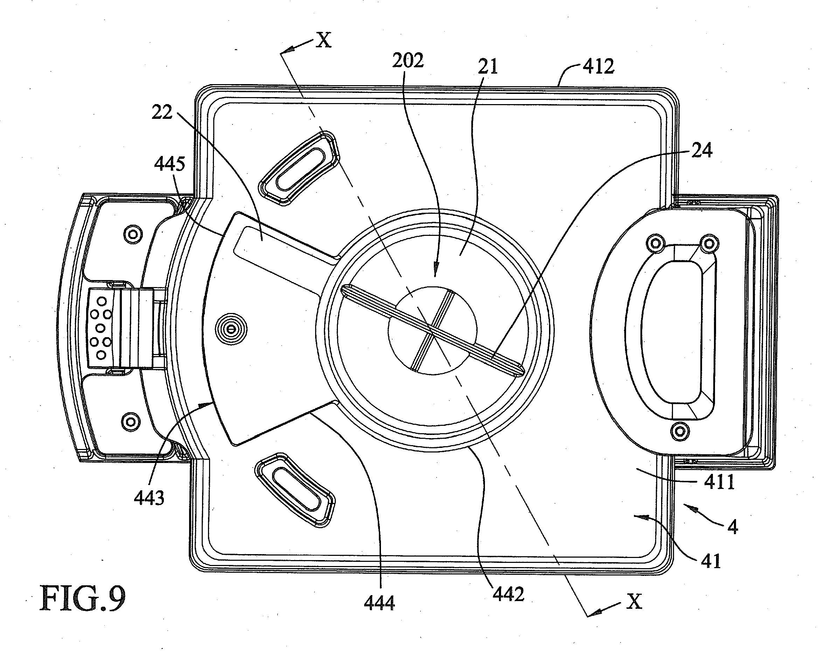

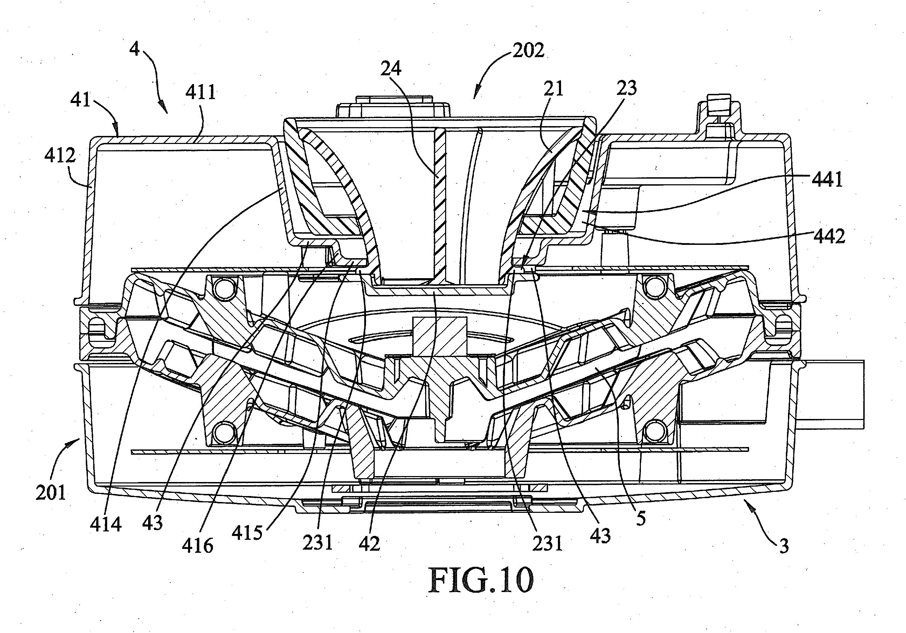

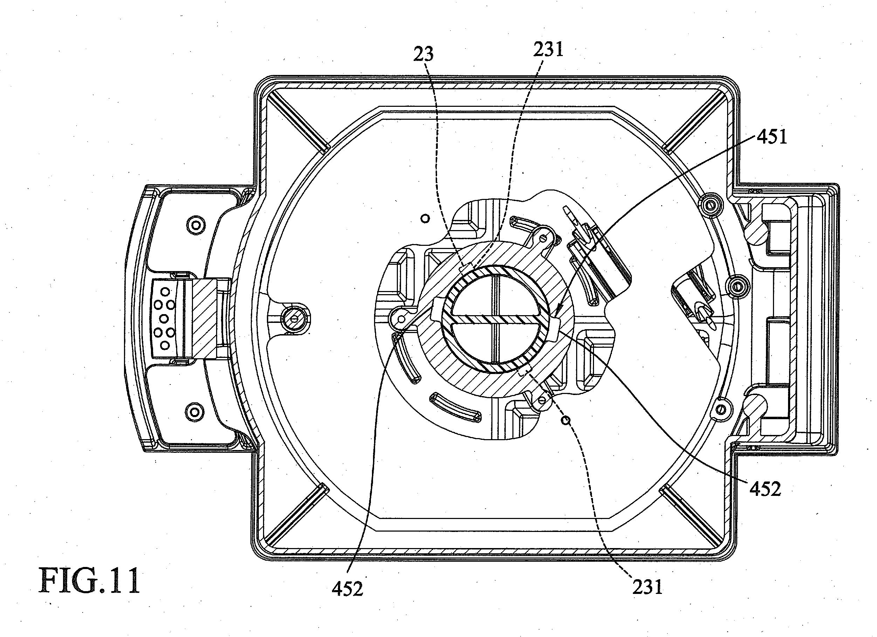

More specifically, referring to FIGS. 6 to 11, the feeding seat 202 is rotatable in the containing recess 441 between a removable position (see FIGS. 6 to 8), where the positioning blocks 231 are respectively aligned with the passing grooves 452 and where the handle 22 is received in the first recess segment 444 of the handle containing portion 443, and a confined position (see FIGS. 9 to 11), where the positioning blocks 231 are respectively misaligned from the passing grooves 452 and where the handle 22 is received in the second recess segment 445 of the handle containing portion 443.

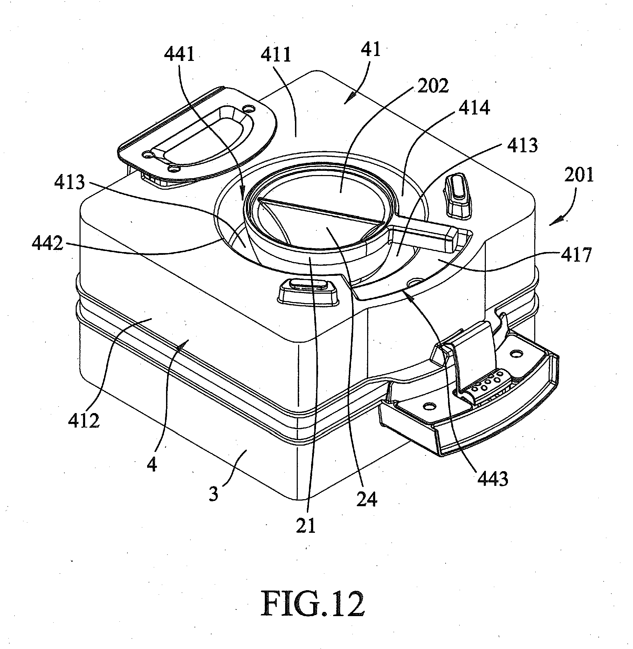

FIG. 12 shows a variation of the embodiment, in which a distance between the upright wall portion 414 of the case wall 41 and the main body 21 of the feeding seat 202 is increased, and the area of the horizontal wall portion 413 is also increased. In other words, the main body 21 of the feeding seat 202 and the main body containing portion 442 of the containing recess 441 are loosely interengaged, thereby facilitating movement of feeding seat 202 into or from the containing recess 441.

To sum up, the feeding seat 202 of this embodiment can be stored in the containing recess 441 when the grilling apparatus is idling, thereby saving storage space for the grilling apparatus.

In the description above, for the purposes of explanation, numerous specific details have been set forth in order to provide a thorough understanding of the embodiment and variation. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A grilling apparatus including a case unit (201) and a feeding seat (202), said case unit (201) including a upper case unit (3) and a lower case unit (4) that are pivotable relative to each other, **characterized in that**: said lower case unit (4) defines a containing recess (441), said feeding seat (202) being operable to be detachably mounted to said upper case unit (3) for a food material to be located and cooked between said upper case unit (3) and said lower case unit (4) and being operable to be detachably received in said containing recess (441);

2. The grilling apparatus as claimed in Claim 1, **characterized in that**:
said feeding seat (202) includes a feeding passage (211), said upper case unit (3) and said lower case unit (4) defining a grilling space (5) therebetween and being operable to uncover said grilling space (5).

3. The grilling apparatus as claimed in Claims 1 or 2, **characterized in that** said containing recess (441) is indented upwardly toward said upper case unit (3).

4. The grilling apparatus as claimed in Claim 2, **characterized in that** said feeding seat (202) further includes a main body (21) that is formed with said feeding passage (211), and a positioning block unit (23) that is disposed on a lower end of said main body (21), said lower case unit (4) including a case wall (41) that defines said containing recess (441), and a positioning wall (42) that is spaced apart from said case wall (41), said case wall (41) and said positioning wall (42) cooperatively defining a positioning space (43) that is disposed above and in spatial communication with said containing recess (441), said case wall (41) further defining a passing groove unit (451) that is located near and under said positioning wall (42) and that is in spatial communication with said containing recess (441) and said positioning space (43), said positioning block unit (23) being operable to enter said positioning space (43) through said passing groove unit (451) and to be subsequently rotated in said positioning space (43) to be misaligned from said passing groove unit (451), so that said positioning block unit (23) is detachably confined in said positioning space (43).

5. The grilling apparatus as claimed in Claim 4, **characterized in that** said feeding seat (202) further includes a handle (22) that is fixedly connected to said main body (21), said containing recess (441) having a main body containing portion (442) and a handle containing portion (443), said main body (21) and said handle (22) of said feeding seat (202) being operable to be respectively received in said main body containing portion (442) and said handle containing portion (443) .

6. The grilling apparatus as claimed in Claim 5, **characterized in that** said positioning block unit (23) includes two positioning blocks (231) that are respectively disposed on two diametrically opposed portions of said main body (21), said passing groove unit (451) including two passing grooves (452) that are formed in an inner wall surface of said case unit (201) defining said containing recess (441) and that are respectively disposed at two diametrically opposed positions of said case wall (41), said handle containing portion (443) having a first recess segment (444) and a second recess segment (445) that is in spatial communication with said first recess segment (444), said feeding seat (202) being rotatable in said containing recess (441) between a removable position, where said positioning blocks (231) are respectively aligned with said passing grooves (452) and said handle (22) is received in said first recess segment (444), and a confined position, where said positioning blocks (231) are respectively misaligned from said passing grooves (452) and said handle (22) is received in said second recess segment (445).

7. The grilling apparatus as claimed in Claim 5, **characterized in that** said main body (21) of said feeding seat (202) has an annular horizontal cross-section, said handle (22) being connected to an upper end of said main body (21), said handle containing portion (443) being connected to an upper end of said main body containing portion (442), said main body containing portion (442) having a circular horizontal cross-section, said handle containing portion (443) having a sector-shaped horizontal cross-section.

## Patentansprüche

1. Ein Grillgerät mit einer Gehäuseeinheit (201) und einem Zuführsitz (202), wobei die Gehäuseeinheit (201) eine obere Gehäuseeinheit (3) und eine untere Gehäuseeinheit (4) aufweist, die relativ zueinander schwenkbar sind, **dadurch gekennzeichnet, dass** die untere Gehäuseeinheit (4) eine Aufnahmeaussparuhg (441) definiert, wobei der Zuführsitz (202) so betriebsfähig ist, dass er abnehmbar an der oberen Gehäuseeinheit (3) montiert werden kann, um ein Lebensmittelmaterial zwischen der oberen Gehäuseeinheit (3) und der unteren Gehäuseeinheit (4) anzuordnen und zu kochen, und betriebsfähig ist, um in der genannten Aufnahmeaussparung (441) abnehmbar aufgenommen zu werden.

2. Der Grillapparat nach Anspruch 1, **dadurch gekennzeichnet dass** der Zuführsitz (202) einen Zuführdurchgang (211) aufweist, wobei die obere Gehäuseeinheit (3) und die untere Gehäuseeinheit (4) einen Grillraum (5) dazwischen definieren und so betätigt werden können, dass der Grillraum (5) freigelegt wird.

3. Der Grillapparat nach Anspruch 1 oder 2, **dadurch gekennzeichnet, dass** die Aufnahmeaussparung (441) nach oben zur oberen Gehäuseeinheit (3) hin eingerückt ist.

4. Der Grillapparat nach Anspruch 2, **dadurch gekennzeichnet, dass** der Zuführsitz (202) ferner einen Hauptkörper (21) enthält, der mit dem Zuführdurchgang (211) geformt ist, und eine Positionierungsblockeinheit (23), die an einem unteren Ende des Hauptkörpers (21) ausgebildet ist, wobei die untere Gehäuseeinheit (4) eine Gehäusewand (41) umfasst, die die Aufnahmeaussparung (441) definiert, und eine Positionierungswand (42), die von der genannten Gehäusewand (41) beabstandet ist, wobei die Gehäusewand (41) und die Positionierungswand (42) zusammenwirkend einen Positionierungsraum (43) definieren, der oberhalb und in räumlicher Verbindung mit der Aufnahmeaussparung (441) angeordnet ist, wobei die Gehäusewand (41) ferner eine Durchgangsrilleneinheit (451) definiert, die sich in der Nähe und unter der Positionierungswand (42) befindet, und die in räumlicher Verbindung mit der Aufnahmeaussparung (441) und dem Positionierungsraum (43) steht, wobei die Positionierungsblockeinheit (23) so betrieben werden kann, dass sie in den Positionierungsraum(43) durch die genannte Durchgangsrilleneinheit (451) eintreten kann und anschließend in dem Positionierungsraum (43) gedreht werden kann, um von der Durchgangsrilleneinheit (451) versetzt zu sein, so dass die Positionierungsblockeinheit (23) lösbar in dem Positionierungsraum (43) eingeschlossen ist.

5. Der Grillapparat nach Anspruch 4,
**dadurch gekennzeichnet, dass** der Zuführsitz (202) ferner einen Griff (22) aufweist, der fest mit dem Hauptkörper (21) verbunden ist, wobei die Aufnahmeaussparung (441) einen Hauptkörperaufnahmeabschnitt (442) und einen Griffaufnahmeabschnitt (443) aufweist, wobei der Hauptkörper (21) und der Griff (22) des Zuführsitzes (202) betätigt werden kann, in dem Hauptkörperaufnahmeabschnitt (442) beziehungsweise dem Griffaufnahmeabschnitt (443) aufgenommen zu werden.

6. Der Grillapparat nach Anspruch 5, **dadurch gekennzeichnet, dass** die Positionierungsblockeinheit (23) zwei Positionierungsblöcke (231) umfasst, die jeweils an zwei diametral gegenüberliegenden Abschnitten des Hauptkörpers (21) angeordnet sind, wobei die Durchgangsrilleneinheit (451) zwei Durchgangsrillen (452) umfasst, die in einer Innenwandfläche der Gehäuseeinheit (201)ausgebildet sind, die die Aufnahmeaussparung (441) definieren, und die jeweils an zwei diametral gegenüberliegenden Positionen der Gehäusewand (41) angeordnet sind, wobei der Griffaufnahmeabschnitt (443) ein erstes Ausnehmungssegment (444) und ein zweites Ausnehmungssegment (445) aufweist, das in räumlicher Kommunikation mit dem ersten Ausnehmungssegment (444) ist, wobei der Zuführsitz (202) in der Aufnahmeausnehmung (441) drehbar ist zwischen einer entfernbaren Position, in der die Positionierungsblöcke (231) jeweils mit den Durchgangsrillen (452) ausgerichtet sind und der Griff (22) in dem ersten Ausnehmungssegment (444) aufgenommen wird, und einer eingeschränkten Position, in der die Positionierungsblöcke (231) jeweils von den genannten Durchgangsrillen (452) versetzt sind und der Griff (22) in dem zweiten Ausnehmungssegment (445) aufgenommen wird.

7. Der Grillapparat nach Anspruch 5, **dadurch gekennzeichnet, dass** der Hauptkörper (21) des Zuführsitzes (202) einen ringförmigen horizontalen Querschnitt aufweist, wobei der Griff (22) mit einem oberen Ende des Hauptkörpers (21) verbunden ist, wobei der Griffaufnahmeabschnitt (443) mit einem oberen Ende des Hauptkörperaufnahmeabschnitt (442) verbunden ist, wobei der Hauptkörperaufnahmeabschnitt (442) einen kreisförmigen horizontalen Querschnitt aufweist, wobei der Griffaufnahmeabschnitt (443) einen sektorförmigen horizontalen Querschnitt aufweist.

## Revendications

1. Appareil de cuisson à gril incluant un ensemble de boîtier (201) et un siège d'alimentation (202), ledit ensemble de boîtier (201) incluant un élément de boîtier supérieur (3) et un élément de boîtier inférieur (4) qui peuvent pivoter l'un par rapport à l'autre,
**caractérisé en ce que** :
ledit élément de boîtier inférieur (4) définit une cavité de réception (441), ledit siège d'alimentation (202) étant configuré pour être monté de façon détachable sur ledit élément de boîtier supérieur (3) pour une matière alimentaire à placer et à cuire entre ledit élément de boîtier supérieur (3) et ledit élément de boîtier inférieur (4) et étant configuré pour être reçu de façon détachable dans ladite cavité de réception (441).

2. Appareil de cuisson à gril selon la revendication 1, **caractérisé en ce que** :
ledit siège d'alimentation (202) inclut un passage d'alimentation (211), ledit élément de boîtier supérieur (3) et ledit élément de boîtier inférieur (4) définissant un espace de cuisson (5) entre eux et pouvant fonctionner pour découvrir ledit espace de cuisson (5).

3. Appareil de cuisson à gril selon la revendication 1 ou 2, **caractérisé en ce que** ladite cavité de réception (441) est échancrée vers le haut vers ledit élément de boîtier supérieur (3).

4. Appareil de cuisson à gril selon la revendication 2, **caractérisé en ce que** ledit siège d'alimentation (202) inclut en outre un corps principal (21) qui est formé avec ledit passage d'alimentation (211), et un élément de bloc de positionnement (23) qui est disposé sur une extrémité inférieure du dit corps principal (21), ledit élément de boîtier inférieur (4) incluant une paroi de boîtier (41) qui délimite ladite cavité de réception (441) et une paroi de positionnement (42) espacée de ladite paroi de boîtier (41), ladite paroi de boîtier (41) et ladite paroi de positionnement (42) délimitant en coopération un espace de positionnement (43) disposé au-dessus et en communication spatiale avec ladite cavité de réception (441), ladite paroi de boîtier (41) définissant en outre un organe d'encoche de passage (451) situé à côté et sous ladite paroi .de positionnement (42) et qui est en communication spatiale avec ladite cavité de réception (441) et ledit espace de positionnement (43), ledit élément de bloc de positionnement (23) étant fonctionnel pour entrer dans ledit espace de positionnement (43) à travers ledit organe d'encoche de passage (451) et pour être tourné ensuite dans ledit espace de positionnement (43) afin d'être désaligné par rapport au dit organe d'encoche de passage (451) de manière à ce que ledit élément de bloc de positionnement (23) soit confiné de manière détachable dans ledit espace de positionnement (43).

5. Appareil de cuisson à gril selon la revendication 4, **caractérisé en ce que** ledit siège d'alimentation (202) inclut en outre une poignée (22) qui est reliée de façon fixe au dit corps principal (21), ladite cavité de réception (441) comprenant une partie de réception du corps principal (442) et une partie de réception de poignée (443), ledit corps principal (21) et ladite poignée (22) du dit siège d'alimentation (202) étant configurés pour être reçus respectivement dans ladite partie de réception du corps principal (441) et ladite partie de réception de poignée (443).

6. Appareil de cuisson à gril selon la revendication 5, **caractérisé en ce que** ledit élément de bloc de positionnement (23) inclut deux blocs de positionnement (231) qui sont disposés respectivement sur deux parties diamétralement opposées du dit corps principal (21), ledit organe d'encoche de passage (451) incluant deux encoches de passage (452) qui sont formées dans une surface de paroi intérieure du dit ensemble de boîtier (201) délimitant ladite cavité de réception (441) et qui sont disposées respectivement à des positions diamétralement opposées de ladite paroi de boîtier (41), ladite partie de réception de poignée (443) comprenant un premier segment de cavité (444) et un second segment de cavité (445) qui est en communication spatiale avec ledit premier segment de cavité (444), ledit siège d'alimentation (202) pouvant tourner dans ladite cavité de réception (441) entre une position amovible où lesdits blocs de positionnement (231) sont alignés respectivement avec lesdites encoches de passage (452) et ladite poignée (22) est reçue dans ledit premier segment de cavité (444), et une position confinée où lesdits blocs de positionnement (231) sont respectivement désalignés par rapport aux dites encoches de passage (452) et ladite poignée est reçue dans ledit second segment de cavité (445).

7. Appareil de cuisson à gril selon la revendication 5, **caractérisé en ce que** ledit corps principal (21) du dit siège d'alimentation (202) a une section transversale horizontale annulaire, ladite poignée (22) étant connectée à une extrémité supérieure du dit corps principal (21), ladite partie de réception de poignée (443) étant connectée à une extrémité supérieure de ladite partie de réception de corps principal (442), ladite partie de réception de corps principal (442) ayant une section transversale horizontale circulaire et la dite partie de réception de poignée (443) ayant une section transversale horizontale en forme de secteur.
